**Europäisches Patentamt**

**European Patent Office**

**Office européen des brevets**

(11) Publication number: **0 065 363**
**B1**

(12) **EUROPEAN PATENT SPECIFICATION**

(45) Date of publication of patent specification: **20.11.86**

(51) Int. Cl.⁴: **B 07 C 5/342**

(21) Application number: **82302129.0**

(22) Date of filing: **26.04.82**

(54) Photoelectric detection device for color sorting apparatus.

(30) Priority: **14.05.81 JP 73036/81**

(43) Date of publication of application:
**24.11.82 Bulletin 82/47**

(45) Publication of the grant of the patent:
**20.11.86 Bulletin 86/47**

(84) Designated Contracting States:
**CH DE FR IT LI NL**

(56) References cited:
**FR-A-2 413 645**
**GB-A- 299 194**
**US-A- 223 169**
**US-A-1 985 085**
**US-A-2 162 529**
**US-A-3 066 797**
**US-A-3 069 013**

(73) Proprietor: SATAKE ENGINEERING CO., LTD.
**19-10, Ueno 1-chome**
**Taito-ku Tokyo 110 (JP)**

(72) Inventor: **Satake, Toshihiko**
**2-38, Saijonishihonmachi**
**Higashihiroshima-shi (JP)**
Inventor: **Sakaki, Hideki**
**6302, Yunomoto**
**Oaza Misonou Higashihiroshima-shi (JP)**

(74) Representative: **Hayward, Denis Edward Peter**
**et al**
**Lloyd Wise, Tregear & Co. Norman House**
**105-109 Strand**
**London WC2R 0AE (GB)**

The file contains technical information
submitted after the application was filed and
not included in this specification

Courier Press, Leamington Spa, England.

## Description

The present invention relates to an improvement in photoelectric detection devices for use in apparatus for sorting granular materials by colour. Such apparatus may be used for separating unwanted beans or grains from desired beans or grains, in the case of soybeans, adzuki beans, rice grains and so forth, according to their colours.

The colour sorting apparatus of the type described above usually has light sources adapted to illuminate the granular material flowing down from a chute, and light receiving units each having a lens assembly with a filter and a photoelectric sensor and adapted to receive the light reflected by or transmitted through the stream of flowing grains. The apparatus further has a control circuit adapted to produce a control signal in accordance with the difference in the quantity of reflected or transmitted light as between the desired grains of ordinary colour and unwanted grains of other colours, as sensed by the photoelectric sensors. A jet nozzle is operated in accordance with the control signal so as to blow the unwanted grains of other colours out of the stream.

In the conventional apparatus of the type described above, it is necessary to provide a plurality of different filters for use in the sorting of different kinds of grains, such as unhulled rice, polished rice, adzuki beans and so forth, and to employ manual labour for changing the filters each time the kind of grain to be sorted is changed. The manual work of changing the filters is time-consuming and troublesome, and furthermore there is also the trouble of storage of the filters not in use.

To obviate this problem, it has been proposed to use a single filter of an intermediate colour adaptable to a plurality of different kinds of grains of fairly similar colours. In this case, however, the efficiency in distinguishing the changes in the amounts of reflected and transmitted light is decreased, causing erroneous operation and serious loss of the sorting performance of the apparatus.

In the art of colorimetry it has been proposed to change colour filters during the operation of the apparatus by manual means. Thus, both in GB—A—299194 and in US—A—2232169 there are disclosed arrangements for selecting colour filters by lateral rectilinear translation of the filter carriers in guides by means of operating rods extending out through open horizontal slots formed in the casing of the colorimeter. The U.S. Patent additionally discloses a further arrangement in which the filters are mounted on discs that are apparently rotated by the operator's hand inserted through an open hand-hole in the side of the casing.

It is an object of the present invention to achieve an improved photoelectric detection device for colour sorting apparatus, capable of overcoming problems of the prior art.

According to the invention, there is provided apparatus for sorting granular materials according to colour, comprising at least one chute; means for feeding a granular material containing both grains of a desired colour and grains of other colours on to said chute, the granular material being discharged from the lower end of the chute along a predetermined path; light source means for illuminating the stream of grains flowing from said chute along said predetermined path that the light is reflected by and/or transmitted through said grains; a colour reference plate and at least one light-receiving unit disposed optically opposed to said colour reference plate and including a photoelectric sensor receiving light reflected by and/or transmitted through said grains and generating a control signal; and a jet nozzle operative in response to the control signal for deflecting grains of said other colours out of said predetermined path; characterised in that the light-receiving unit has a lens barrel closed at one end by an end-block and containing an enclosure within which are enclosed a lens and a colour filter which is static in the optical path during operation of the apparatus with a particular granular material and through which the light passes to the photoelectric sensor by way of an aperture plate, a plurality of such filters for use with different granular materials are mounted on a substantially sector-shaped plate that is supported for angular movement within the enclosure in the lens barrel on a rotary shaft such that any selected one of said filters can be brought into position in the optical path in the lens barrel, said rotary shaft extending in the enclosure parallel to the optical axis and having one end journalled in the end block of the lens barrel; and external actuator means is provided coupled to the shaft end that is journalled in the end block of the lens barrel for actuating said angularly movable sector plate from outside said enclosure whereby any desired filter can be selected without opening the enclosure.

By way of example only, an embodiment of the invention will now be described with reference to the accompanying drawings in which:

Fig. 1 is a sectional view of a colour sorting apparatus incorporating a photoelectric detection device in accordance with the invention;

Fig. 2 is an enlarged sectional view of a photoelectric sorting chamber of the colour sorting apparatus shown in Fig. 1;

Fig. 3 is an enlarged sectional view of a light receiving unit of a photoelectric detection device in accordance with an embodiment of the invention;

Fig. 4 is a sectional view taken along the line IV—IV of Fig. 3; and

Fig. 5 is an illustration of operation of the lens barrel of the light receiving unit.

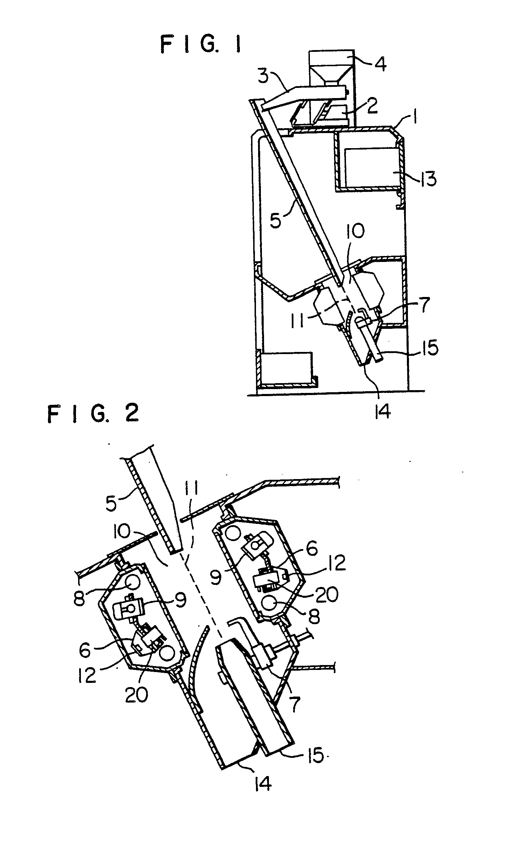

Referring to Figs. 1 and 2, a colour sorting apparatus to which the invention is applied has a housing 1 on which is mounted a feeder 3 equipped with a vibrator 2. A hopper 4 is provided at the supply side of the feeder 3 while a chute 5 is disposed at the discharge side of the same. The chute 5 is connected at its lower end to a photoelectric sorting chamber 10 accommodating light receiving units 6, an air jet nozzle 7, light sources 8 and reference colour plates 9. The light sources 8 illuminate the stream 11 of grains, containing desired grains of ordinary colour and unwanted grains of different colours, discharging linearly from the chute 5. The amounts of light reflected by or transmitted through the stream 11 are detected by photoelectric sensors 12 in the light-receiving units 6 which are aligned with respective reference colour plates 9. Signals from the photoelectric sensors 12 are delivered to a control circuit 13 which in turn produces a control signal for activating the jet nozzle 7. In consequence, the unwanted grains of different colours are blown by the air from the nozzle 7 away from the stream 11 and are discharged through the discharge hole 14 provided at the bottom of the chamber 10, whereas the desired grains of ordinary colour are discharged from the apparatus through a grain collecting sleeve 15.

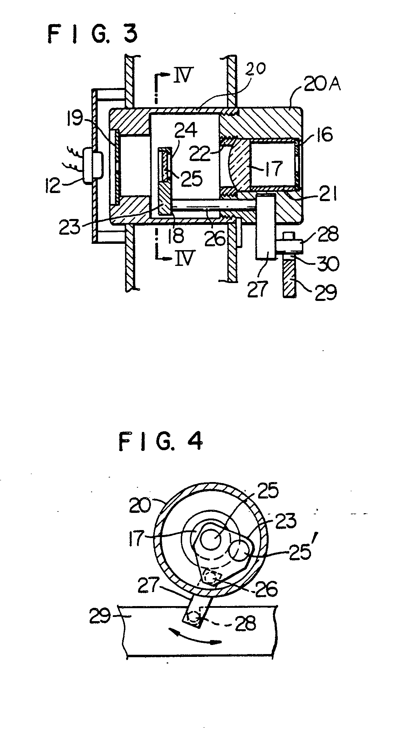

A photoelectric detection device for use as each of the light-receiving units 6 in the apparatus of Figures 1 and 2 will be described hereinunder with reference to Figs. 3, 4 and 5. A lens barrel 20 is closed at one end by an end-block 20A and contains an enclosure which accommodates, in succession, a slit aperture plate 16, a converging lens 17, a filter unit 18 and a slit aperture plate 19 arranged along the path of light that enters the lens barrel at its end directed toward the illuminated stream of granular material and the respective reference plate 9. The light is finally received by the photoelectric sensor 12. Reference numerals 21 and 22 denote, respectively, a lens spacer sleeve and a lens retaining member. The filter unit 18 consists of a plurality of filter elements 25, 25' of different colours which are mounted on a substantially sector-shaped plate member 23 in a plurality of apertures 24 formed in the sector-shaped plate member 23 at positions on an arc concentric with the axis of the plate member 23. A rotary shaft 26 has one end fixed concentrically to the radially inner apex of the sector-shaped plate member 23 so as to extend therefrom at a right angle to the plane of the plate member, in a direction parallel to the optical axis of the lens barrel, the other end of the shaft being journalled in the end-block 20A of the lens barrel 20. The end of rotary shaft 26 journalled in the end-block 20A is fixed to an actuating arm 27 which projects to the outside of the lens barrel. A pin 28 provided on the external end of the actuating arm 27 is fitted in a recess 30 formed in a connecting rod 29 which extends at one end to the end of the housing 1. A filter changing handle 31 is attached to the projecting end of the connecting rod 29.

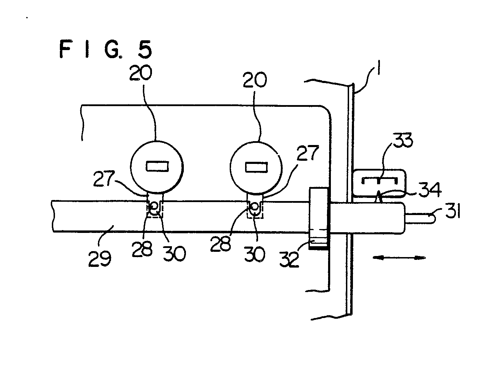

The arrangement heretofore described is provided for each of the light-receiving units 6. It is usual to provide in a colour sorting apparatus a plurality of sorting units arranged side by side each of which includes a feeder, a chute and a photoelectric sorting chamber wherein there are a plurality of light receiving units as in the case of the illustrated embodiment. The members such as plate member 23, actuating arm 27 and so forth, of these side by side sorting units are arranged in parallel, and the actuating arms 27 are connected to a common connecting rod 29 through respective pins 28, as will be clearly seen from Fig. 5.

In operation, the connecting rod 29 is axially moved as shown by arrows in Fig. 5 by means of the handle 31 so that a switching is made between the filter 25 and the filter 25' in each light receiving device. A reference numeral 32 denotes a guide plate and 33 denotes a scale for showing the kinds of grains and 34 denotes a pointer attached to the connecting rod 29 and adapted to indicate the kind of the grain in cooperation with the scale 33. For sorting a different kind of grain, the connecting rod 29 is manipulated by the handle 31 until the pointer 37 is moved to point to the designated kind of grain. In consequence, the rotary shafts 26 are rotated through the pins 28 and the actuating arms 27 and thus bring the filters corresponding to the designated grain into the operative position.

As has been described, a plate member carrying a plurality of filters of different colours is mounted in the lens barrel of each light receiving unit, so that the change of the filter can be made easily and quickly by a simple manipulation of the handle. This means that, in a sorting apparatus suited for sorting a variety of different grains with high efficiency, the duration of suspension of operation of the sorting apparatus for changing the filters is minimised.

**Claims**

1. Apparatus for sorting granular materials according to color, comprising at least one chute (5); means (3) for feeding a granular material containing both grains of a desired colour and grains of other colors on to said chute, the granular material being discharged from the lower end of the chute along a predetermined path (11); light source means (8) for illuminating the stream of grains flowing from said chute along said predetermined path so that the light is reflected by and/or transmitted through said grains; a color reference plate (9) and at least one light-receiving unit (6) disposed optically opposed to said colour reference plate and including a photoelectric sensor (12) receiving light reflected by and/or transmitted through said grains and generating a control signal; and a jet nozzle (7) operative in response to the control signal for deflecting grains of said other colors out of said predetermined path; characterised in that the light-receiving unit has a lens barrel (20) closed at one end by an end-block (20A) and containing an enclosure within which are enclosed a lens (17) and a color filter (25) which is static in the optical path during operation of the apparatus with a particular granular material and through which the light passes to the photoelectric sensor by way of an aperture plate (16), a plurality of such filters (25, 25') for use with different granular materials are mounted on a substantially sector-shaped plate (23) that is supported for angular movement within the enclosure in the lens barrel on a rotary shaft (26) such that any selected one of said filters can be brought into position in the optical path in the lens barrel, said rotary shaft extending in the enclosure parallel to the optical axis and having one end journalled in the end-block of the lens barrel; and external actuator means (27, 29) is provided coupled to the shaft end that is journalled in the end block of the lens barrel for actuating said angularly movable sector-shaped plate from outside said enclosure whereby any desired filter can be selected without opening the enclosure.

2. Apparatus as defined in Claim 1, wherein there are provided a plurality of chutes arranged in side-by-side relation and each discharging a respective stream of granular material, with light source means, a respective light-receiving unit and a respective grain-deflecting means for each stream; the filter carrier of each light-receiving unit is mounted on a respective rotary shaft supported by the respective lens barrel; and the actuator means comprises a common actuator member (29) operatively connected to all said shafts to angularly move all the filter carriers in unison.

**Patentansprüche**

1. Vorrichtung zum Sortieren von körnigen Materialien nach der Farbe, enthaltend wenigstens ein Gerinne (5); eine Einrichtung (3) zum Zuführen eines körnigen Materials, das sowohl Körner einer gewünschten Farbe und Körner anderer Farben enthält, zu dem Gerinne, wobei das körnige Material vom unteren Ende des Gerinnes längs einer vorbestimmten Bahn (11) abgegeben wird; eine Lichtquelleneinrichtung (8) zum Beleuchten des Stroms von Körnern, der von dem Gerinne längs der vorbestimmten Bahn fließt, so daß das Licht von den Körnern abgelenkt und/oder durchgelassen wird; eine Farbbezugsplatte (9) und wenigstens eine lichtempfangende Einheit (6), die der Farbbezugsplatte optisch gegenüberstehend angeordnet ist und einen photoelektrischen Sensor (12) enthält, der Licht aufnimmt, das von den Körnern reflektiert und/oder durchgelassen wird, und ein Steuersignal erzeugt; und eine Strahldüse (7), die in Abhängigkeit von dem Steuersignal wirksam ist, um Körner der anderen Farben aus dem vorbestimmten Weg abzulenken; dadurch gekennzeichnet, daß die lichtempfangende Einheit eine Linsentrommel (20) aufweist, die am einen Ende von einem Endblock (20A) verschlossen ist und eine Umhüllung enthält, innerhalb der eine Linse (17) und ein Farbfilter (25) eingeschlossen sind, das während des Betriebs der Vorrichtung mit einem speziellen körnigen Material im optischen Weg statisch angeordnet ist und durch das das Licht auf den photoelektrischen Sensor durch eine öffnungsplatte (16) fällt, wobei eine Mehrzahl solcher Filter (25, 25') zur Verwendung mit verschiedenen körnigen Materialien auf einer im wesentlichen sektorförmigen Platte (23) angeordnet sind, die zur Winkelbewegung innerhalb de Linsentrommel auf einer Drehwelle (26) so abgestützt ist, daß ein beliebiges ausgewähltes der Filter in die Stellung im optischen Weg in der Linsentrommel gebracht werden kann, wobei sich die Drehwelle in der Umhüllung parallel zur optischen Achse erstreckt und mit einem Ende in dem Endblock der Linsentrommel drehbar gelagert ist; und daß eine äußere Betätigungseinrichtung (27, 29) vorgesehen ist, die mit dem Wellenende, das in dem Endblock der Linsentrommel gelagert ist, gekuppelt ist, um die winkelmäßig bewegliche sektorförmige Platte von außerhalb der Umhüllung zu betätigen, wodurch jedes gewünschte Filter ausgewählt werden kann, ohne die Umhüllung zu öffnen.

2. Vorrichtung nach Anspruch 1, bei der eine Mehrzahl von Gerinnen Seite an Seite angeordnet sind und jede eine entsprechende Strömung von körnigem Material abgibt, mit Lichtquelleneinrichtungen, einer entsprechenden lichtempfangenden Einheit und einer entsprechenden Kornablenkeinrichtung für jede Strömung; der Filterträger einer jeden lichtempfangenden Einheit auf einer entsprechenden Drehwelle montiert ist, die von der entsprechenden Linsentrommel abgestützt ist; und die Betätigungseinrichtung ein gemeinsames Betätigungsglied (29) enthält, das mit allen Wellen wirksam verbunden ist, um alle Filterträger gleichzeitig im Winkel zu bewegen.

**Revendications**

1. Appareil pour trier des matières granulaires selon la couleur, comprenant au moins une goulotte (5); un moyen (3) pour faire avancer une matière granulaire contenant à la fois des grains d'une couleur voulue et des grains d'autres jusque sur la goulotte, la matière granulaire étant évacuée de l'extrémité inférieure de la goulotte le long d'un chemin prédéterminé (11); une source lumineuse (8) pour éclairer le courant de grains sortant de la goulotte le long du chemin prédéterminé de sorte que la lumière est réfléchie par et/ou transmise à travers les grains; une plaque de référence de couleur (9) et au moins un unité réceptrice de lumière (6) placée optiquement à l'opposé de la plaque de référence de couleur et incluant un détecteur photoélectrique (12) recevant la lumière réfléchie par et/ou transmise à travers les grains et engendrant un signal de commande; et un ajutage (7) actif en réponse au signal de commande pour dévier les grains des autres couleurs hors du chemin prédéterminé; caractérisé en ce que l'unité réceptrice de lumière comporte une enveloppe cylindrique d'objectif (20) fermée à une extrémité par un bloc d'extrémité (20A) et contenant une enceinte à l'intérieur de laquelle sont enfermés une lentille (17) et un filtre de couleur (25) qui est statique dans le chemin optique pendant le fonctionnement de l'appareil avec une matière granulaire particulière et à travers lequel la lumière passe jusqu'au détecteur photoélectrique au moyen d'une plaque d'ouverture (16), un ensemble de ces filtres (25, 25') servant avec des matières granulaires différentes étant montés sur une plaque essentiellement en forme de secteur (23) qui est supportée pour un mouvement angulaire à l'intérieur de l'enceinte dans l'enveloppe cylindrique d'objectif sur un arbre tournant (26), de telle sorte que n'importe quel filtre sélectionné parmi les filtres peut être mis en position dans le chemin optique dans l'enveloppe cylindrique d'objectif, l'arbre tournant s'étendant dans l'enceinte parallèlement à l'axe optique et comportant une extrémité tourillonnée dans le bloc d'extrémité de l'enveloppe cylindrique d'objectif; et en ce qu'un moyen d'actionnement extérieur (27, 29) est prévu qui est couplé à l'extrémité d'arbre qui est tourillonnée dans le bloc d'extrémité de l'enveloppe cylindrique d'objectif pour actionner la plaque en forme de secteur mobile angulairement à partir de l'extérieur de l'enceinte, ce qui permet de sélectionner n'importe quel filtre voulu sans ouvrir l'enceinte.

2. Appareil selon la revendication 1, dans lequel sont prévues un ensemble de goulottes disposées côte à côte et évacuant chacune un courant respectif de matière granulaire, avec une source lumineuse, une unité réceptrice de lumière respective et un moyen de déviation de grains respectifs pour chaque courant; le porteur de filtre de chaque unité réceptrice de lumière étant monté sur un arbre tournant respectif supporté par l'enveloppe cylindrique d'objectif respectif; et le moyen d'actionnement comprenant un élément actionneur commun (29) connecté activement à l'ensemble des arbres pour déplacer angulairement tous les porteurs de filtre de façon identique.

0 065 363

FIG. 1

FIG. 2

1

F I G. 3

F I G. 4

F I G. 5